Europäisches Patentamt

European Patent Office

Office européen des brevets

(19)

(11) Veröffentlichungsnummer: **0 175 978**

A1

## (12) EUROPÄISCHE PATENTANMELDUNG

(21) Anmeldenummer: 85111212.8

(22) Anmeldetag: 05.09.85

(51) Int. Cl.⁴: **H 02 K 16/00**
H 02 K 37/16, H 02 K 21/18
H 02 K 25/00

(30) Priorität: 14.09.84 CH 4422/84

(43) Veröffentlichungstag der Anmeldung:
02.04.86 Patentblatt 86/14

(84) Benannte Vertragsstaaten:
AT CH DE FR GB IT LI NL SE

(71) Anmelder: Wiederkehr, Hans, Dr.
Hangstrasse 107
CH-8153 Rümlang(CH)

(72) Erfinder: Wiederkehr, Hans, Dr.
Hangstrasse 107
CH-8153 Rümlang(CH)

(74) Vertreter: EGLI-EUROPEAN PATENT ATTORNEYS
Horneggstrasse 4
CH-8008 Zürich(CH)

(54) **Motor.**

(57) Der Motor besteht aus einem Stator und einem um eine Achse drehenden Rotor aus Elektro- bzw. Permanentmagnet. Dabei weisen Stator und/oder Rotor versetzt zueinander angeordnete polarisierte Schalen (6, 7) bzw. Polkappen (2, 3) auf, wobei die Polarität der einzelnen Schalen (6, 7) bzw. Polkappen (2, 3) wechselbar und/oder die Stärke ihres magnetischen Kraftfeldes veränderbar ist. Schalen (6, 7) bzw. Polkappen (2, 3) sind axial entlang einer Achse versetzt angeordnet. Axial aufeinanderfolgende Schalen bzw. Polkappen sind jeweils um einen Winkel (w) gedreht versetzt angeordnet.

EP 0 175 978 A1

./...

Fig. 3

Motor

———

Die Erfindung betrifft einen Motor mit Stator und um eine
Achse drehenden Rotor aus Elektro- bzw. Permanentmagneten
sowie ein Verfahren zum Bewegen eines um eine Achse
drehenden Rotors in einem Stator durch magnetische Kraft
eines zwischen Stator und Rotor aufgebauten magnetischen
Feldes.

Im Zuge der Energieverknappung wird immer häufiger versucht, natürlich vorkommende Energieträger als Energiespender zu benutzen. Zu derartigen natürlich vorkommenden
Energieträgern gehören auch die Permanentmagnete. Inwieweit diese als unendliche Energiespender zu betrachten
sind und wieviele Lastspiele ein Permanentmagnet vertragen
kann, bis seine Scherung auf Halbwert angelangt ist und
damit ausserhalb der Gebrauchsgrenze liegt, ist vorerst
unbekannt.

Jedes bisher bekannte System aus Permanentmagneten muss
durch äussere Kraftanwendung dazu gebracht werden, einen
oder mehrere Polschritte zu drehen, obwohl das eigentliche
Drehmoment am Rotor gemessen (rein statisch) als beträchtlich bezeichnet werden kann. Grund dieses nur schrittweise sich Fortbewegens ist, dass nach einem Wechsel über verschiedene Polarisierungsgruppen ein gegenseitiger Polaritätszustand auftritt, der jedes periphere Drehmoment aufhebt.

So ist beispielsweise vorgesehen, dass bei den sogenannten Magnetläufermotoren deren Läufer aus aufmagnetisiertem dauermagnetischem Werkstoff besteht. In diesem Fall ersetzt der Dauermagnet die Gleichstrommagnetisierung aus anderen bekannten Motoren. Magnetläufermotoren weisen beträchtliche Kippmomente bei synchroner Drehzahl auf und sind folglich äusserst leistungsfähig. Ein Nachteil ist jedoch, dass sie ohne besondere Hilfsmittel kein eigenes Hochlaufdrehmoment erzeugen. Werden Magnetläufermotoren für grössere Leistungen verwendet, muss deshalb zusätzlich ein Anlaufkäfig neben oder über dem Magnetkörper angeordnet werden.

Der Erfinder hat sich zum Ziel gesetzt, einen Motor der eingangs erwähnten Art zu entwickeln, bei dem diese zusätzlichen Anlaufvorrichtungen entfallen, bei dem die den Permanentmagneten innewohnenden natürlichen Energien sehr effektiv genutzt und eine dem Motor zuzuführende Energie minimiert werden kann.

Zur Lösung dieser Aufgabe führt, dass der Stator und/oder der Rotor versetzt zueinander angeordnete polarisierte Schalen bzw. Polkappen aufweist/en wobei die Polarität der einzelnen Schalen bzw. Polkappen wechselbar und/oder die Stärke ihres magnetischen Kraftfeldes veränderbar ist.

Dabei kann es sich bei dem Stator um eine Statorhülle handeln, an deren Innenwand sowohl axial wie auch umfänglich versetzt unterschiedlich polarisierte Flächen vorgesehen
sind. Bevorzugt sind dann die Polkappen gleicher Polarität an einem Rotor nicht versetzt.

Andererseits, und dies dürfte technisch leichter realisierbar sein, kann der Stator parallel in einer Ebene angeordnete Schalen aufweisen, welche axial aufeinanderfolgend die gleiche Polarität haben und unterschiedlich
polarisierte Schalen sich gegenüberliegen. In diesem Fall
sollen die sich gegenüberliegend unterschiedlich polarisierten Hohlkappen des Rotors an einer Achse angeordnet
sein, wobei jeweils aufeinanderfolgende Polkappenpaare um
jeweils einen bestimmten Winkel gedreht sind. Sind zum
Beispiel drei aufeinanderfolgende Polkappenpaare vorgesehen, so beträgt dieser Winkel 120°.

Da sich jedoch an einem Stator bzw. Rotor angeordnete
Schalen bzw. Polkappen gegenseitig beeinflussen und sie
zudem schwer einzeln ansteuerbar sind, soll erfindungsgemäss der Motor in Einzelmotoren aufgespalten sein, wobei
jeder Einzelmotor sowohl einen Stator mit Schalen wie auch
einen Rotor mit Polkappen besitzt. In dem nachfolgend beschriebenen Ausführungsbeispiel sind drei Einzelmotoren
vorgesehen, welche durch die gemeinsame Drehachse verbunden sind. An dieser Drehachse sind die Rotoren jeweils
aufeinanderfolgend gezeigt und um 120° gedreht. Es liegt
selbstverständlich auch im Rahmen der Erfindung, dass die
Rotoren in einer Ebene aufeinanderfolgend nacheinander an
der Achse angeordnet sind, dagegen aber die Statoren um
den jeweiligen Winkel gedreht sind.

Ein wesentliches Element der Erfindung liegt darin, dass
die Polarität und/oder die Stärke des Magnetfeldes beim Betrieb des Motors gesteuert beeinflusst wird. Die Beeinflussung geschieht vorzugsweise durch Zugabe von elektrischer Energie, wobei eine Schwächung des einen Magnetfeldes oder eine Stärkung des anderen Magnetfeldes erfolgen kann. Die Kombination von beidem ist selbstverständlich auch möglich.

Die Umpolung der Magnetfelder bestimmter Einzelmotoren kommt insbesondere bei der Anwendung von Permanentmagneten in Frage. Dabei kann die Umpolung auf einfache Weise zum Beispiel durch Drehen des Stators des umzupolenden Einzelmotors geschehen. Bei der Verwendung von Elektromotoren erfolgt die Umpolung durch Aenderung der Stromrichtung.

Im übrigen hat sich herausgestellt, dass nur eine sehr geringe Menge an Steuerstrom benötigt wird, da dieser Strom nur während etwa 5 bis 10° der Drehbewegung des Rotors eingeschaltet ist. Durch die Umpolung gelingt es, die Kraftlinienfelder immer so zu richten, dass sich ihre Wirkungen addieren und die Drehbewegung des Rotors verbessert wird. Bei der Schwächung oder Stärkung des elektrischen Feldes werden die Kraftlinienfelder zwar nicht gerichtet, sie werden aber in ihrer Stärke immer dann verringert, wenn sie der Drehbewegung entgegenwirken und immer dann gestärkt, wenn sie in Richtung der Drehbewegung laufen.

Weitere Vorteile Merkmale und Einzelheiten der Erfindung ergeben sich aus der nachfolgenden Beschreibung bevorzugter Ausführungsbeispiele sowie anhand der Zeichnung; diese zeigt in

Figur 1  eine teilweise geschnittene Seitenansicht eines erfindungsgemässen Magnetmotors;

Figur 2   eine Stirnansicht des Magnetmotors nach Figur 1;

Figur 3   eine perspektivische, schematisch dargestellte
          Ansicht eines weiteren Ausführungsbeispiels eines
          Magnetmotors;

Figur 4   ein Ablaufschema einer Drehung eines Magnetmotor.

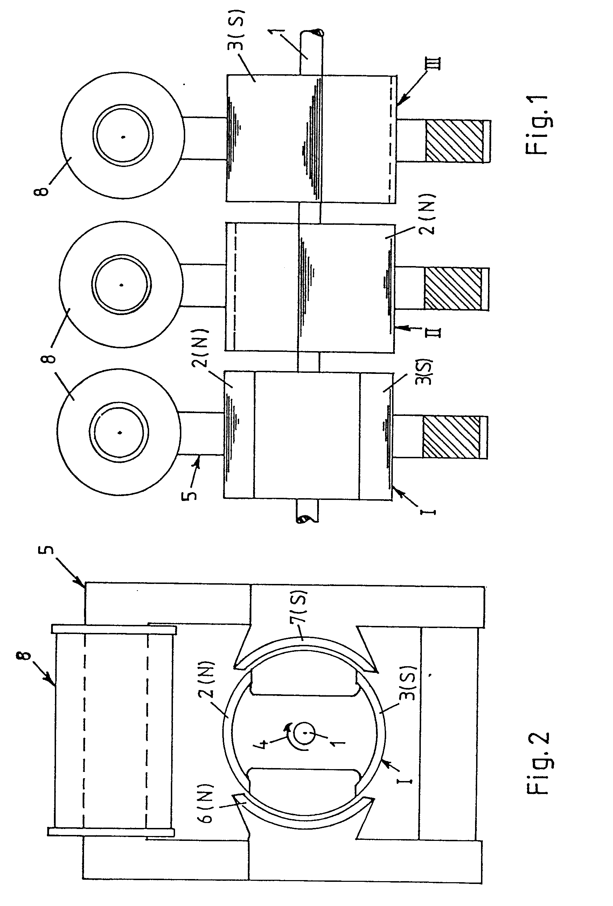

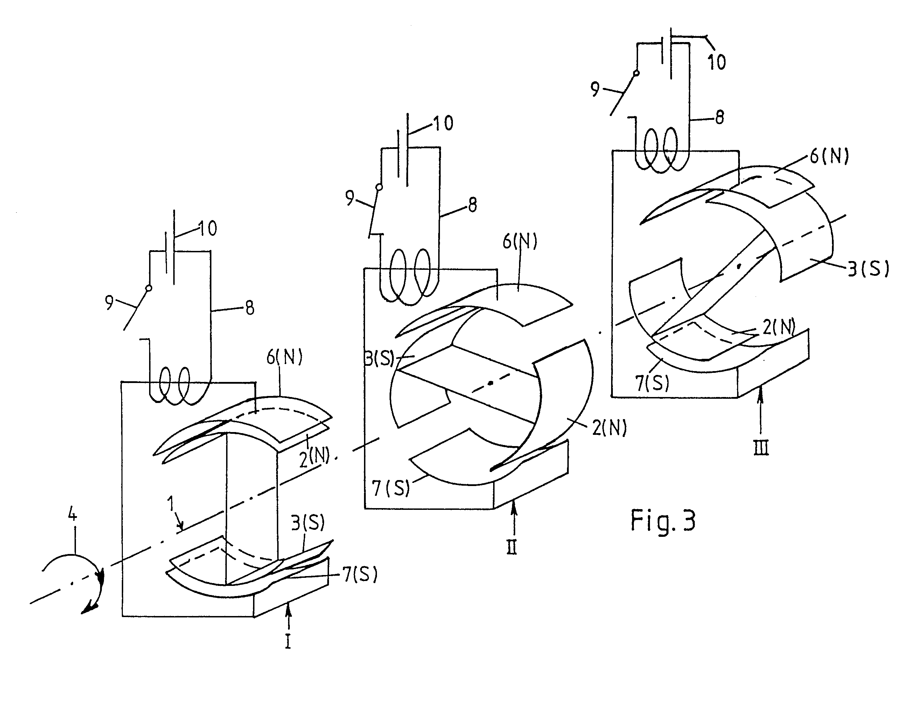

Nach Figur 1 sind auf einer gemeinsamen Achse 1 drei Einzelmotoren I, II und III angeordnet. Jeder dieser Einzelmotoren weist einen Rotor mit zwei Polkappen 2 und 3 auf, wobei die Polkappe 2 einen Nordpol N und die Polkappe 3 einen Südpol S bildet. Die Einzelmotoren I, II und III drehen in Richtung des Pfeils 4 in Figur 2 bzw. 3 um die Achse 1.

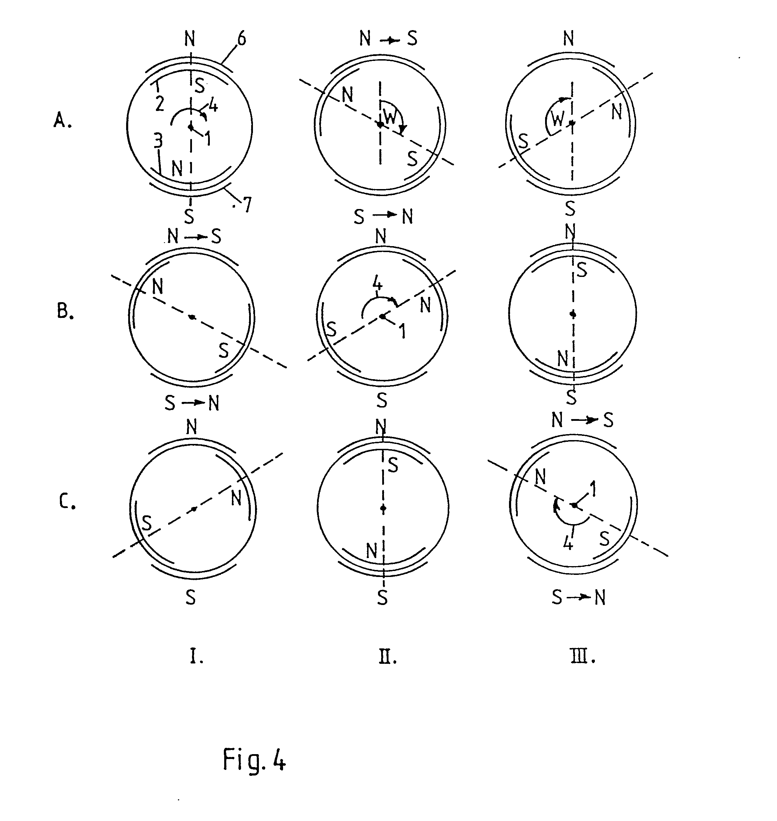

Den Rotoren ist jeweils ein Rahmen 5 zugeordnet, welcher mit einem Stator aus zwei Schalen 6 und 7 den jeweiligen Rotor umfasst. Dabei ist die Schale 6 als Nordpol N und Schale 7 als Südpol S ausgebildet. Beide Pole N und S bzw. Schalen 6 und 7 können über eine Spule 8 kurzgeschlossen werden. Im Rahmen der Erfindung liegt jedoch auch die Möglichkeit der Umpolung der Pole N und S während des Betriebs des Motors z.B.durch ein einfaches Drehen der Statorschalen. In Figur 3 ist schematisch dargestellt, dass jede Spule 8 über einen Schalter 9 mit einer Stromquelle 10 verbunden ist; der Schalter 9 ist z.B. durch Nocken auf der Rotorwelle betätigt.
Insbesondere aus Figur 4 ist ersichtlich, dass die Polkappen 2 und 3 der jeweiligen Rotoren um einen Winkel w von je 120° versetzt zueinander an der Achse 1 angeordnet sind, während die Schalen 6 und 7 der Statoren immer in der gleichen Ebene (in Figur 2 in der waagrechten und in Figur 3 und 4 in der senkrechten) zueinander stehen. Die gleiche Wirkung ist natürlich auch zu erzielen, wenn die Polkappen der Rotoren in einer Ebene in der Achse 1 angeordnet dafür aber die Schalen der Statoren jeweils um einen Winkel w versetzt wären.

Bei dem Ablaufschema nach Figur 4 sind nebeneinander die drei Einzelmotoren I, II und III gezeigt. Die jeweilige Stellung des Rotors wird mit A, B und C bezeichnet, nach der Stellung C bewegen sich die Rotoren wieder in die Stellung A.

In der Ausgangsstellung A liegen sich beim Einzelmotor I die Polkappe 3 (S) des Rotors und die Schale 6 (N) des Stators sowie Polkappe 2 (N) und Schale 7 (S) genau gegenüber. Der um 120° versetzt angeordnete Rotor des Einzelmotors II steht dabei mit seinen Polkappen 2 (N) und 3 (S) in der Nähe der gleich gepolten Schalen 6 und 7, so dass zwischen beiden Paaren abstossende Kräfte der Drehrichtung 4 entgegenwirken würden. Um dies zu vermeiden, sind die beiden Schalen 6 und 7 umgepolt bzw. um die Achse 1 gedreht, so dass sie die Polkappen 2 und 3 nicht abstossen sondern anziehen. Der dritte Einzelmotor III hat dagegen den Bereich der Schalen 6 und 7 mit seinen Polkappen 2 und 3 wieder teilweise verlassen, so dass die gleiche Polung der noch in der Nähe liegenden Polkappen 2 und 3 zu einer erwünschten Abstossung führt.

In der Stellung B hat der Einzelmotor I die Stellung des Einzelmotors II in der Stellung A inne, so dass auch hier die Schalen 6 bzw. 7 umgepolt werden müssen. Die Stellung des Einzelmotors II entspricht der Stellung des Einzelmotors III in der Stellung A und die des Einzelmotors III derjenigen des Einzelmotors I in der Stellung A.

In der Stellung C muss zu guter Letzt der Einzelmotor III
umgepolt werden.

Für die Umpolung werden in der Regel Elektromagnete als
Stator und Permanentmagnete als Rotorpolkappen benutzt.
Erfindungsgemäss kann das Umpolen aber auch durch Polschwächung ersetzt sein, in dem beispielsweise die Statorschalen 6 und 7 des Einzelmotors II in Stellung A, des
Einzelmotors I in Stellung B und des Einzelmotors III in
Stellung C kurzgeschlossen werden. Ebenso können auch die
jeweils anderen Magnete stossweise und partiell aufmagnetisiert, das heisst deren magnetische Kraft verstärkt werden. Hierdurch ist im Gegensatz zur einfachen Umpolung die
Möglichkeit einer Steuerung des Magnetmotors gegeben. Der
jeweilige Steuerstrom, bevorzugt aus einem Gleichrichter
versorgt dabei jeden einzelnen Magnet und ist etwa während
5 bis 10° der Drehbewegung eingeschaltet.

Patentansprüche

1. Motor mit Stator und um eine Achse drehenden Rotor aus Elektro- bzw Permanentmagneten,

   dadurch gekennzeichnet,

   dass der Stator und/oder der Rotor versetzt zueinander angeordnete polarisierte Schalen (6, 7) bzw. Polkappen (2, 3) aufweist/en, wobei die Polarität der einzelnen Schalen (6, 7) bzw. Polkappen (2, 3) wechselbar und/oder die Stärke ihres magnetischen Kraftfeldes veränderbar ist.

2. Motor nach Anspruch 1, dadurch gekennzeichnet, dass die Schalen (6, 7) bzw. Polkappen (2, 3) axial entlang der Achse (1) versetzt angeordnet sind.

3. Motor nach Anspruch 2, dadurch gekennzeichnet, dass die Schalen (6, 7) bzw. Polkappen (2, 3) axial aufeinanderfolgend jeweils um einen Winkel (w) gedreht versetzt angeordnet sind.

4. Motor nach Anspruch 3, dadurch gekennzeichnet, dass der Winkel (w) 120° beträgt, so dass drei aufeinanderfolgende Einzelmotoren (I, II und III) den Magnetenmotor bilden.

5. Motor nach einem der Ansprüche 1 bis 4, dadurch gekennzeichnet, dass die Schalen (6, 7) des Stators mit einer an einen Stromkreis (10) angeschlossenen Spule (8) zum Induzieren des magnetischen Feldes verbunden

- 9 -

ist, dessen Stärke über die Spule regelbar ist.

6. Motor nach Anspruch 5, dadurch gekennzeichnet, dass der Stromkreis nur während etwa 5 bis 10° der Drehbewegung des Rotors eingeschaltet ist.

7. Motor nach einem der Ansprüche 1 bis 6, dadurch gekennzeichnet, dass die Schalen (6, 7) kurzschliessbar sind.

8. Verfahren zum Bewegen eines um eine Achse drehenden Rotors in einem Stator durch magnetische Kraft eines zwischen Stator und Rotor aufgebauten magnetischen Feldes, dadurch gekennzeichnet, dass Stator und/oder Rotor mit versetzt zueinander angeordneten polarisierten bzw. magnetisierten Schalen bzw. Polkappen versehen wird/werden, wobei die Polarität während der Bewegung des Rotors gewechselt und/oder die Stärke des magnetischen Kraftfeldes verändert wird.

9. Verfahren nach Anspruch 8, dadurch gekennzeichnet, dass diejenigen Schalen bzw. Polkappen umgepolt und/oder geschwächt werden, auf die in Drehrichtung eine Schale oder Polkappe gleicher Polarität folgt.

10. Verfahren nach Anspruch 8, dadurch gekennzeichnet, dass diejenigen Schalen bzw. Polkappen mit einer höheren magnetischen Energie versehen werden, die in Drehrichtung nach einer Schale oder Polkappe gleicher Polarität liegen.

Fig. 2

6 (N)  2 (N)

8

5

4

7 (S)

1

I  3 (S)

Fig. 1

8  8  8

5  2 (N)  3 (S)

1

I  3(S)  II  2(N)  III

1/3

0175978

Fig. 3

3/3

0175978

Fig. 4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-C- 174 947 (GILBERT)<br>* Seite 1, Zeile 27 - Seite 2, Zeile 30; Figuren 1,2 * | 1-5,8 | H 02 K 16/00<br>H 02 K 37/16<br>H 02 K 21/18<br>H 02 K 25/00 |
| X | DE-A-2 743 564 (TELDIX)<br>* Seite 8, Zeilen 1-18; Figur 2 * | 1-4,8 | |
| X | FR-A-2 344 999 (CSG)<br>* Seite 2, Zeilen 20-37; Seite 6, Zeilen 17-37; Figuren 1,2,10 * | 1-3,7 | |

RECHERCHIERTE
SACHGEBIETE (Int. Cl 4)

H 02 K 16/00
H 02 K 25/00

Der vorliegende Recherchenbericht wurde für alle Patentansprüche erstellt.

| Recherchenort | Abschlußdatum der Recherche | Prüfer |
|---|---|---|
| DEN HAAG | 11-12-1985 | LE GUAY P.A. |

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82